# EUROPÄISCHE PATENTSCHRIFT

(11) **EP 4 270 724 B1**
(45) Veröffentlichungstag und Bekanntmachung des Hinweises auf die Patenterteilung: **09.12.2026**
(21) Anmeldenummer: 23167700.6
(22) Anmeldetag: 13.04.2023
(51) Int. Cl.: H02J 7/00

(54) **VORRICHTUNG ZUM ENTLADEN VON BATTERIEEINHEITEN**
APPARATUS FOR DISCHARGING BATTERY UNITS
DISPOSITIF DE DÉCHARGEMENT D'UNITÉS DE BATTERIE

(30) Priorität: 27.04.2022 DE 102022204047
(43) Veröffentlichungstag der Anmeldung: 01.11.2023
(73) Patentinhaber: Robert Bosch GmbH, 70442 Stuttgart (DE)
(72) Erfinder: Krieger, Sebastian, 89073 Ulm (DE); Bihler, Christoph, 70736 Fellbach (DE)

(56) Entgegenhaltungen:
- DE-A1- 102020 118 418

## Beschreibung

Die vorliegende Erfindung betrifft eine Vorrichtung zum Entladen von Batterieeinheiten und ein Verfahren zum Betreiben einer derartigen Vorrichtung.

### Hintergrund der Erfindung

Akkumulatoren bzw. Batterien in (Kraft- bzw. Elektro-) Fahrzeugen oder in der elektrischen Antriebstechnik können nach ihrem Einsatz am Ende ihrer Lebensdauer einem Recyclingprozess zugeführt werden. Ferner können auch Batterien, die am Ende ihres Fertigungsprozesses als nicht in Ordnung gekennzeichnet wurden und für ihren vorgesehenen Einsatzzweck nicht freigegeben werden können, einem Recycling unterzogen werden. Vor dem Recyceln derartiger Batterien ist es sinnvoll, diese zunächst möglichst vollständig zu entladen, um die Restenergie der Batterien noch nutzen zu können und um z.B. den Folgeprozess zu verbessern, z.B. die Herstellung von sog. schwarzer Masse.

Beispielsweise zeigt das Dokument DE 10 2020 118 418 A1 eine Akkumulator-Entladevorrichtung zum Entladen von Akkumulatoren, mit (a) einem ersten Akku-Anschluss zum Anschließen eines ersten Akkumulators, (b) einem zweiten Akku-Anschluss zum Anschließen eines zweiten Akkumulators, (c) zumindest einem dritten Akku-Anschluss zum Anschließen eines dritten Akkumulators und (d) einem Last-Anschluss für eine Last zum Abführen einer elektrischen Leistung beim Entladen der Akkumulatoren. Ferner ist vorgesehen, dass die Akkumulator-Entladevorrichtung (e) eine Entladeschaltung, (i) einen ersten Kurzschlussschalter, (ii) einen ersten Spannungsmesser, der angeordnet ist zum Messen einer ersten Akku-Spannung, die über dem ersten Akku-Anschluss abfällt, (iii) einen zweiten Kurzschlussschalter, (iv) einen zweiten Spannungsmesser, der angeordnet ist zum Messen einer zweiten Akku-Spannung, die über dem zweiten Akku-Anschluss abfällt, (v) einen dritten Kurzschlussschalter, (vi) einen dritten Spannungsmesser, der angeordnet ist zum Messen einer dritten Akku-Spannung, die über dem dritten Akku-Anschluss abfällt, und (vii) eine Steuereinheit aufweist, (f) wobei die Steuereinheit ausgebildet ist zum automatischen Durchführen eines Verfahrens mit den Schritten: (i) für alle Spannungsmesser Erfassen der jeweiligen Akku-Spannung, (ii) wenn die jeweilige Akku-Spannung eine vorgegebene Minimal-Spannung überschreitet, Schalten des entsprechenden Akkumulators in eine Reihenschaltung mit zumindest einem anderen Akkumulator, (iii) wenn die jeweilige Akku-Spannung die Minimal-Spannung nicht überschreitet, Entfernen des entsprechenden Akkumulators aus der Reihenschaltung mittels des entsprechenden Kurzschlussschalters.

### Offenbarung der Erfindung

Erfindungsgemäß werden eine Vorrichtung zum Entladen von Batterieeinheiten und ein Verfahren zum Betreiben einer derartigen Vorrichtung mit den Merkmalen der unabhängigen Patentansprüche vorgeschlagen. Vorteilhafte Ausgestaltungen sind Gegenstand der Unteransprüche sowie der nachfolgenden Beschreibung.

Die vorliegende Erfindung schlägt eine Förderanlage vor, um kontinuierlich und automatisiert einzelne Batterieeinheiten in eine Entladestation zu deren Entladung zu transportieren und um einzelne entladene Batterieeinheiten kontinuierlich und automatisiert wieder aus der Ent ladestation zu entfernen und durch nachrückende, neue zu entladende Batterieeinheiten zu ersetzen, wobei in der Entladestation vorhandene Batterieeinheiten unterbrechungsfrei entladen werden können, unabhängig davon, ob Batterieeinheiten hinzugefügt oder entfernt werden.

Die erfindungsgemäße Vorrichtung weist eine Vielzahl von Trägereinheiten auf, wobei auf jeder dieser Trägereinheiten jeweils eine zu entladene Batterieeinheit angeordnet und elektrisch kontaktiert werden kann. Insbesondere kann eine elektrische Kontaktierung zwischen den Polen der jeweiligen Batterieeinheit und entsprechenden Kontaktelementen der jeweiligen Trägereinheit hergestellt werden. Es versteht sich, dass auch mehrere Batterieeinheiten pro Trägereinheit angeordnet werden können, wobei beispielsweise eine Schaltung der auf der jeweiligen Trägereinheit angeordneten Batterieeinheiten erzeugt werden kann, beispielsweise eine Reihenschaltung oder eine Parallelschaltung oder eine Kombination daraus, und wobei diese Schaltung der Batterieeinheiten elektrisch mit der jeweiligen Trägereinheit kontaktiert werden kann.

Die Vorrichtung weist ferner ein Fördersystem auf, das dazu eingerichtet ist, einzelne der Trägereinheiten zu transportieren. Zweckmäßigerweise kann dieses Fördersystem eine Vielzahl von einzelnen Fördereinheiten beispielsweise in Form von einzelnen Förderbändern bzw. Transportbändern, Förderwalzen oder selbstfahrenden Trägereinheiten aufweisen, um die Trägereinheiten zwischen verschiedenen Stationen der Vorrichtung zu transportieren. Insbesondere können mit Hilfe des Fördersystems je nach Bedarf einzelne Trägereinheiten individuell transportiert werden oder es können auch Gruppen aus mehreren Trägereinheiten gemeinsam transportiert werden.

Die Vorrichtung weist ferner eine Pufferstation, eine Entladestation und eine Abtransportstation auf. Die Pufferstation ist dazu eingerichtet ist, einzelne der Trägereinheiten, auf welchen jeweils zweckmäßigerweise eine zu entladende Batterieeinheit angeordnet und elektrisch kontaktiert ist, mittels des Fördersystems aufzunehmen bzw. zu empfangen und zwischenzulagern. Die Entladestation ist dazu eingerichtet, einzelne Trägereinheiten der in der Pufferstation zwischengelagerten Trägereinheiten individuell und unabhängig voneinander mittels des Fördersystems aufzunehmen. Die Abtransportstation ist dazu eingerichtet, einzelne Trägereinheiten aus der Entladestation individuell und unabhängig voneinander mittels des Fördersystems abzutransportieren.

In der Pufferstation kann eine Vielzahl von Trägereinheiten bereitgestellt werden, um individuell bei Bedarf in die Entladestation transportiert zu werden. Batterieeinheiten, die auf den in der Entladestation aufgenommenen Trägereinheiten angeordnet sind, können dort entladen werden. Sobald eine Batterieeinheit in der Entladestation ausreichend entladen ist, kann die jeweilige Trägereinheit, auf welcher diese ausreichend entladene Batterieeinheit angeordnet ist, mittels des Fördersystems in die Abtransportstation transportiert werden. Somit wird in der Entladestation ein Platz frei, in welchen automatisch eine in der Pufferstation zwischengelagerte Trägereinheit nachrückt.

Die Vorrichtung weist ferner eine Kontaktierungsanordnung oder Entladeanordnung auf, um Batterieeinheiten, die auf den in der Entladestation aufgenommenen Trägereinheiten angeordnet sind, zu entladen. Die Kontaktierungsanordnung ist dazu eingerichtet, eine elektrische Kontaktierung zu in der Entladestation aufgenommenen Trägereinheiten derart zu erzeugen, dass eine Reihenschaltung von Batterieeinheiten erzeugt wird, die auf diesen elektrisch kontaktierten Trägereinheiten angeordnet sind, Batterieeinheiten dieser Reihenschaltung zu entladen und die elektrische Kontaktierung zu einzelnen Trägereinheiten individuell und unabhängig voneinander zu trennen, so dass die auf diesen Trägereinheiten angeordneten Batterieeinheiten individuell und unabhängig voneinander aus der Reihenschaltung entfernt werden, insbesondere ohne dass die Reihenschaltung dabei unterbrochen wird.

Besonders zweckmäßig erlaubt es die Kontaktierungsanordnung, der Reihenschaltung aus zu entladenden Batterieeinheiten flexibel und individuell neue Batterieeinheiten hinzuzufügen und ferner flexibel und individuell Batterieeinheiten aus dieser Reihenschaltung zu entfernen, ohne dass die Reihenschaltung dabei jeweils unterbrochen werden muss. Somit kann kontinuierlich ein Stromfluss in der Reihenschaltung aufrechterhalten werden und die in die Reihenschaltung integrierten Batterieeinheiten können kontinuierlich ohne Unterbrechung entladen werden.

Die Restspannung einer einzelnen Batterieeinheit kann gegebenenfalls zu gering sein, um sie sinnvoll einer Stromsenke zuführen und ausreichend entladen zu können. Durch eine derartige Reihenschaltung aus einer Vielzahl von Batterieeinheiten kann zweckmäßigerweise ein ausreichend hohes Spannungsniveau erreicht werden, um einen konstanten Stromfluss durch diese Reihenschaltung zu erzeugen und um auf diese Weise die einzelnen in die Reihenschaltung integrierten Batterieeinheiten ausreichend entladen zu können.

Zweckmäßigerweise weist die Kontaktierungsanordnung eine mechanische Komponente auf, um die in der Entladestation aufgenommenen Trägereinheiten, insbesondere Kontakte oder Pole dieser Trägereinheit, mechanisch zu berühren und um somit einen mechanischen und elektrischen Kontakt zu den jeweiligen Trägereinheiten und einen elektrischen Kontakt zu den darauf angeordneten Batterieeinheiten herzustellen. Ferner weist die Kontaktierungsanordnung neben dieser mechanischen Komponente besonders zweckmäßig eine elektrische Komponente auf, um die jeweiligen Trägereinheiten bzw. die darauf angeordneten und mit den Trägereinheiten elektrisch verbundenen Batterieeinheiten jeweils flexibel in die Reihenschaltung integrieren zu können und wieder von dieser trennen zu können, ohne dass die Reihenschaltung dabei unterbrochen wird, d.h. so dass weiterhin eine Reihenschaltung der restlichen Batterieeinheiten in der Entladestation besteht und so dass diese restlichen Batterieeinheiten weiterhin ohne Unterbrechung entladen werden können.

Die Erfindung stellt eine Möglichkeit bereit, um einzelne Batterieeinheiten individuell und je nach Bedarf in die Entladestation zu deren Entladung zuzuführen, insbesondere sobald in der Entladestation ein freier Platz zur Aufnahme einer Trägereinheit verfügbar ist. Entsprechend wird es ermöglicht, einzelne Batterieeinheiten je nach Bedarf abhängig von deren aktuellem Ladezustand individuell aus der Entladestation zu entfernen und möglichst zeitnah, insbesondere zeitgleich oder zumindest im Wesentlichen zeitgleich, eine neue zu entladende Batterieeinheit nachrücken zu lassen. Zweckmäßigerweise wird der Status jeder einzelnen Batterieeinheit überwacht, um bei erkannter ausreichender Entladung ein möglichst schnellen Austausch durchzuführen. Es wird ein unabhängiger Tausch einzelner Batterieeinheiten nach deren Entladung trotz variablen Startentladezuständen zwischen 0-100% ermöglicht. Die Pufferstation erlaubt es, Batterieeinheiten in ausreichender Anzahl bereitzustellen, um ein kontinuierliches Nachrücken in die Entladestation und einen kontinuierlichen Betrieb der Entladestation zur Energiebereitstellung sicherzustellen. Ferner wird es ermöglicht, die in der Entladestation befindlichen Batterieeinheiten individuell und flexibel der Reihenschaltung zuzuführen und wieder aus dieser zu entfernen. Auf diese Weise können einzelne Batterieeinheiten in der Entladestation nach deren ausreichender Entladung individuell ausgetauscht werden, ohne dass es zu einer Unterbrechung des Stromflusses in der Reihenschaltung kommt, d.h. ohne Unterbrechungen der Entladung der übrigen in der Entladestation befindlichen Batterieeinheiten. Die aus den Batterieeinheiten entnommene Energie kann einer weiteren Verwertung zur Verfügung gestellt werden. Auf diese Weise wird eine kontinuierliche Entladung von Batterieeinheiten ermöglicht, welche automatisiert individuell ausgetauscht und nachgerückt werden können.

Die Erfindung ermöglicht besonders zweckmäßig ein automatisches, großvolumiges und prozesssicheres Entladen von Batterieeinheiten im industriellen Maßstab. Restenergien aus Batterieeinheiten können effektiv entnommen und für Verbraucher nutzbar gemacht werden, z.B. für ein (Wechsel-) Spannungsnetz, bevor die Batterieeinheiten z.B. einem Recyclingprozess zugeführt werden. Energie kann definiert aus den Batterieeinheiten entnommen und beispielsweise rückgespeist bzw. wiederverwendet werden. Batterieeinheiten können mit einem konstanten Strom kontinuierlich entladen werden, was die Entladung beschleunigt und Netzschwankungen bei der Einspeisung reduziert. Ferner kann durch die Erfindung eine hohe Prozesssicherheit gewährleistet werden, insbesondere in Bezug auf Arbeits- und Brandschutz, durch sicheres und vollständiges Entfernen der Restenergie der Batterieeinheiten. Die Erfindung ermöglicht die Verwirklichung großvolumiger Anlagen, in denen prozesssicher und weitestgehend automatisch Produktionsrückläufer und Feldrückläufer (End-of-Life Energiespeichern) der stofflichen Verwertung zugeführt werden können. Gesetzliche Bestimmungen in Verbindung mit dem umfangreichen Ausbau der Elektromobilität, z.B. Mindest-Rezyklat-Quoten wertvoller Metalle bei der Herstellung von neuen Energiespeichern, können somit eingehalten werden.

Erfindungsgemäß weist die Kontaktierungsanordnung Kontaktelemente auf, die jeweils dazu eingerichtet sind, mit in der Entladestation aufgenommenen Trägereinheiten in Berührung gebracht zu werden und somit elektrisch kontaktiert zu werden. Diese Kontaktelemente stellen besonders zweckmäßig eine mechanische Komponente dar, um die in der Entladestation aufgenommenen Trägereinheiten mechanisch zu berühren und um somit einen mechanischen und elektrischen Kontakt zu den jeweiligen Trägereinheiten herzustellen. Beispielsweise können diese Kontaktierungselemente beweglich ausgebildet sein, so dass die Kontaktierungselemente auf in der Entladestation aufgenommene Trägereinheiten zu und von diesen wegbewegt werden können, um die elektrische Kontaktierung zu diesen Trägereinheiten herzustellen oder zu trennen. Zu diesem Zweck können die Kontaktierungselemente jeweils beispielsweise Kontaktstifte bzw. Kontaktbolzen aufweisen. Beispielsweise können die Kontaktierungselemente mittels pneumatischer oder hydraulischer Aktuatoren, z.B. Zylinder, bewegt werden.

Erfindungsgemäß weist die Kontaktierungsanordnung eine Schalteranordnung mit einer Vielzahl von Schaltereinheiten auf, die dazu eingerichtet ist, die Reihenschaltung von Batterieeinheiten zu erzeugen, die auf den elektrisch kontaktierten Trägereinheiten angeordnet sind, die insbesondere mit den Kontaktelementen in Berührung gebracht sind. Insbesondere können durch Öffnen (=nicht-leitend) oder Schließen (=leitend) der einzelnen Schaltereinheiten einzelne Batterieeinheiten in die Batterie-Reihenschaltung aufgenommen oder wieder aus dieser entfernt werden, insbesondere derart, dass weder für das Hinzufügen noch für das Entfernen der entsprechende Reihenschaltung-Stromkreis unterbrochen werden muss. Beispielsweise kann die Kontaktierungsanordnung für jede Trägereinheit jeweils zwei Schalterelemente aufweisen, die jeweils z.B. als mechanische oder elektronische Schalter ausgebildet sein können, z.B. als Leistungshalbleiterschalterelemente, Transistoren usw. Ein erstes dieser Schalterelemente kann zweckmäßigerweise parallel zu der jeweiligen Trägereinheit bzw. der jeweiligen Batterieeinheit schaltbar sein und ein zweites dieser Schalterelemente kann in Reihe zu der jeweiligen Trägereinheit bzw. der jeweiligen Batterieeinheit schaltbar sein. Durch Ansteuern der jeweiligen Schalterelemente können zu entladende Batterieeinheiten flexibel mit der Reihenschaltung verbunden und wieder von dieser getrennt werden. Die Schalteranordnung kann neben den Schaltereinheiten zweckmäßigerweise noch weitere elektrische oder elektronische Elemente aufweisen, z.B. Dioden, Kondensatoren usw. Zweckmäßigerweise können einzelne der elektrischen oder elektronischen Elemente der Schalteranordnung in die Kontaktelemente integriert sein oder mit diesen elektrisch verbindbar sein. Besonders zweckmäßig weist die Schalteranordnung Gleichspannungsanschlüsse zum Bereitstellen einer Gleichspannung auf, wenn wenigstens eine Batterieeinheit in die Reihenschaltung integriert ist.

Erfindungsgemäß weist die Kontaktierungsanordnung eine Entladeschaltung auf, die dazu eingerichtet ist, Batterieeinheiten der Reihenschaltung zu entladen. Beispielsweise kann die Entladeschaltung eine als eine Senke bzw. Last vorgesehen sein, um einen Stromfluss aus der Reihenschaltung der Batterieeinheiten zu entnehmen. Ferner kann die Entladeschaltung beispielsweise als eine Strom- bzw. Spannungsquelle fungieren, um die aus den Batterieeinheiten entnommene Energie in ein Spannungsnetz einzuspeisen. Zweckmäßigerweise ermöglicht es die Entladeschaltung, die aus den Batterieeinheiten entnommene Energie zu steuern bzw. zu regeln und zu überwachen. Die Entladeschaltung kann beispielsweise eine Stromrichterschaltung umfassen, welche die aus den Batterieeinheiten entnommen Gleichspannung auf ein höheres Spannungsniveau anhebt. Ferner kann die Stromrichterschaltung diese Gleichspannung beispielsweise in eine für ein Wechselspannungsnetz geeignete Wechselstromausgangsspannung wandeln. Besonders zweckmäßig kann diese Entladeschaltung mit den Gleichspannungsanschlüsse der Schalteranordnung verbunden sein, um die von der Schalteranordnung bereitgestellte Gleichspannung weiter zu verarbeiten, z.B. zur Bereitstellung in einem (Gleich- oder Wechsel-) Spannungsnetz.

Gemäß einer vorteilhafteren Ausgestaltung weist jede Trägereinheit jeweils feste Kontaktelemente und flexible, nicht-starre Leitungsverbindungen auf, wobei die festen Kontaktelemente mit einer auf der Trägereinheit angeordneten Batterieeinheit über die flexiblen Leitungsverbindungen elektrisch verbindbar sind. Beispielsweise kann eine zu entladende Batterieeinheit automatisch oder manuell auf der Trägereinheit montiert bzw. befestigt werden. Beispielsweise können die flexiblen Leitungsverbindungen jeweils als Kabelschwanz oder Kabelschlauch ausgebildet sein. Diese flexiblen Leitungsverbindungen ermöglichen es besonders zweckmäßig, die festen Kontaktelemente der Trägereinheit flexibel mit Batterieeinheiten unterschiedlicher Typen und unterschiedlicher Größe zu verbinden. Ferner kann die jeweilige Batterieeinheit flexibel auf der Trägereinheit angeordnet werden und muss nicht zwingend an einem exakt vorgesehenen Platz montiert werden. Die Trägereinheiten können ferner beispielsweise jeweils eine Messeinrichtung umfassen, um zu überprüfen, ob erfolgreich eine elektrische Kontaktierung zu der jeweiligen Batterieeinheit hergestellt wurde. Alternativ oder zusätzlich kann eine derartige Überprüfung beispielsweise auch stationär in der Vorrichtung erfolgen, z.B. in einer weiter unten erläuterten Beladestation. Beispielsweise kann jede Trägereinheit auch mehrere feste Kontaktelemente aufweisen, welche jeweils über eine flexible Leitungsverbindung mit einer Batterieeinheit verbunden werden können, so dass pro Trägereinheit jeweils auch mehrere Batterieeinheiten angeordnet werden können.

Besonders zweckmäßig sind die oben erläuterten, insbesondere beweglichen, Kontaktelemente der Kontaktierungsanordnung dazu eingerichtet, mit diesen festen Kontakteelementen der Trägereinheit in Berührung gebracht zu werden, um somit die elektrische Kontaktierung zu dieser Trägereinheit und zu der darauf angeordneten Batterieeinheit herzustellen. Die festen Kontaktelemente können beispielsweise jeweils einen standardisierten Anschluss darstellen. Die Kontaktelemente der Kontaktierungsanordnung stellen insbesondere ein entsprechendes, standardisiertes Gegenstück für diesen Anschluss dar. Auf diese Weise kann insbesondere eine standardisierte Verbindung zwischen Trägereinheit und Entladestation bereitgestellt werden, welche eine automatisiertes Entladen erlaubt und es der Vorrichtung ermöglicht, mit einer hohen Varianz an Batterieeinheiten zurecht zu kommen. Ferner können die flexiblen Leitungsverbindungen beispielsweise je nach zu kontaktierender Batterieeinheit ein passendes Gegenstück zu den Anschlüssen, Kontakten oder Polen der jeweiligen Batterieeinheit bereitstellen.

Vorteilhafterweise weist die Vorrichtung ferner eine Sicherheitsstation auf, die dazu eingerichtet ist, einzelne Trägereinheiten aus der Entladestation direkt und unmittelbar mittels des Fördersystems aufzunehmen und mittels Sicherheitsmechanismen zu beaufschlagen. In einem sicherheitskritischen Notfall, z.B. bei einem Brand einer Batterieeinheit oder wenn in einer Batterieeinheit eine irreversible, unerwünschte chemische Reaktion auftritt, kann diese defekte Batterieeinheit sofort aus der Entladeeinheit entfernt und in die Sicherheitsstation transportiert werden, um dort mittels des Sicherheitsmechanismen diesem Notfall entgegenzuwirken. Die Sicherheitsstation kann insbesondere als eine Lösch- bzw. Abklingstation ausgebildet sein und die Sicherheitsmechanismen können beispielsweise ein brandhemmendes Gelbad und eine Löscheinrichtung umfassen. Zum Erkennen eines entsprechenden sicherheitskritischen Notfalls können beispielsweise physikalische Größen bei der Entladung der Batterieeinheiten überwacht werden, z.B. zeitliche Verläufe von Strom, Spannung, Temperatur usw., und/oder es können Sensoren in der Entladestation verwendet werden, z.B. Rauchsensoren, Schnüffelsensor usw. Wenn beispielsweise mittels der verwendeten Überwachungstechnik ein unerwünschtes Erwärmen einer Batterieeinheit über einen vorgegebenen Grenzwert hinaus festgestellt wird, kann die Kontaktierung zu dieser Batterieeinheit bzw. zu der jeweiligen Trägereinheit unmittelbar unterbrochen werden, z.B. durch Zurückfahren der jeweiligen Kontaktelemente der Kontaktierungsanordnung, z.B. der Kontaktbolzen, in deren Ausgansposition. Die jeweilige Batterieeinheit kann dann in die Sicherheitsstation ausgeschleust werden, wo die entsprechenden Sicherheitsmechanismen eingeleitet werden, z.B. Absenken der Batterieeinheit in ein brandhemmendes Gelbad oder eine andere adäquate Löscheinrichtung.

Vorzugsweise weist die Vorrichtung ferner eine Beladestation auf, in der auf einzelnen Trägereinheiten jeweils eine Batterieeinheit angeordnet und kontaktiert werden kann. Das Fördersystem, insbesondere eine entsprechende Fördereinheit des Fördersystems, ist dazu eingerichtet, einzelne der Trägereinheiten von der Beladestation zu der Pufferstation zu transportieren, und die Pufferstation ist dazu eingerichtet, einzelne der Trägereinheiten von der Beladestation mittels des Fördersystems bzw. mittels der jeweiligen Fördereinheit aufzunehmen und zwischenzulagern. Sobald in der Beladestation eine Trägereinheit mit einer Batterieeinheit zu deren Entladung bestückt ist, kann diese Trägereinheit mittels des Fördersystems zweckmäßigerweise automatisiert zu der Pufferstation transportiert werden. Beispielsweise kann diese Beladestation ein (Hand-) Arbeitsplatz sein, an welchem manuell durch einen Bediener die Batterieeinheiten auf den Trägereinheiten angeordnet und mit diesem kontaktiert werden. Ferner kann die Beladestation auch eine automatisierte Einheit darstellen, in welcher die Beladung und/oder die Kontaktierung automatisch erfolgen. Die Beladestation kann zweckmäßigerweise von der Entladestation getrennt und abgegrenzt sein. Besonders zweckmäßig kann die Entladestation in einem geschützten Bereich liegen, z.B. innerhalb eines Schutzzauns. Auf diese Weise kann ein Schutz des Bedieners gewährleistet werden, insbesondere ein Berühr- und Arbeitsschutz.

Vorzugsweise weist die Vorrichtung ferner eine Entnahmestation auf, die dazu eingerichtet ist, einzelne Trägereinheiten aus der Abtransportstation mittels des Fördersystems zu empfangen. In dieser Entnahmestation können in den empfangenen Trägereinheiten angeordneten und entladenen Batterieeinheiten elektrisch von der jeweiligen Trägereinheit getrennt und entnommen werden. Zweckmäßigerweise können Trägereinheiten mittels des Fördersystems kontinuierlich und nacheinander in die Entnahmestation transportiert werden. Insbesondere sind die Entnahmestation und die Beladestation mittels des Fördersystems gekoppelt, so dass entladende Trägereinheiten von der Entnahmestation zu der Beladestation zum erneuten Beladen transportiert werden können. Auf diese Weise kann insbesondere ein in sich geschlossenes Förderkreislauf realisiert werden. Wie auch die Beladestation kann diese Entnahmestation ein (Hand-) Arbeitsplatz sein, an welchem manuell durch einen Bediener die Batterieeinheiten von den Trägereinheiten entfernet werden. Wie auch das Beladen in der Beladestation kann dieses Entnehmen der Batterieeinheiten insbesondere in einer separaten Station erfolgen, welche von der Entladestation getrennt und abgegrenzt ist, um den Schutz des Bedieners zu gewährleisten. Ferner kann die Entnahmestation auch eine automatisierte Einheit sein, in welcher das Trennen der Kontaktierung und/oder das Entfernen der Batterieeinheiten automatisch erfolgen.

Gemäß einer besonders bevorzugten Ausgestaltung weist die Pufferstation eine oder mehrere Puffereinheiten auf, wobei jede dieser Puffereinheiten jeweils dazu eingereicht ist, eine Trägereinheit zwischenzulagern, insbesondere, bis die jeweilige Trägereinheit an die Entladestation weitertransportiert werden soll. Bevorzugt weist die Entladestation eine oder mehrere Entladeeinheiten auf, wobei jede dieser Entladeeinheiten jeweils dazu eingereicht ist, eine Trägereinheit von einer der Puffereinheiten der Pufferstation mittels des Fördersystems aufzunehmen. Zweckmäßigerweise weist die Kontaktierungsanordnung für jede dieser Entladeeinheiten jeweils ein Kontaktelement auf, um die elektrische Kontaktierung zu der der in dieser jeweiligen Entladeeinheit aufgenommenen Trägereinheit herzustellen. Die Anzahl der Entladestationen kann insbesondere variiert werden, um die bereitgestellte Energie skalieren zu können. Bevorzugt ist jeweils eine der Puffereinheiten einer der Entladeeinheiten zugewiesen und einander zugewiesene Puffereinheiten und Entladeeinheiten sind jeweils über eine gemeinsame Fördereinheit des Fördersystems gekoppelt, z.B. über ein gemeinsames Förderband. Mittels dieser Fördereinheiten können einzelne Batterieeinheiten aus den einzelnen Puffereinheiten jeweils je nach Bedarf direkt und unmittelbar in die jeweilige zugewiesene Entladeeinheit nachrücken, insbesondere sobald diese Entladeeinheit wieder leer ist, d.h. insbesondere sobald die zuvor in dieser jeweiligen Entladeeinheit aufgenommene Trägereinheit abtransportiert wurde. Zweckmäßigerweise sind die einzelnen Puffereinheiten in einer ersten Richtung nebeneinander angeordnet. Die einzelnen Entladeeinheiten sind zweckmäßigerweise ebenfalls in dieser ersten Richtung nebeneinander angeordnet. Einander zugewiesene Puffereinheiten und Entladeeinheiten sind insbesondere in einer zweiten Richtung, insbesondere senkrecht zu der ersten Richtung, jeweils nebeneinander bzw. voreinander angeordnet. Trägereinheiten können von den einzelnen Puffereinheiten in die jeweilige zugewiesene Entladeeinheit mittels der jeweiligen Fördereinheiten in der zweiten Richtung transportiert werden. Ferner können Trägereinheiten mittels des Fördersystems zwischen einzelnen Puffereinheiten zweckmäßigerweise in der ersten Richtung transportiert werden. Wenn beispielsweise weniger Trägereinheiten als Puffereinheiten zur Verfügung stehen, können einzelne Trägereinheiten auf diese Weise flexibel zu denjenigen Puffereinheiten transportiert werden, deren zugewiesene Entladeeinheiten leer sind.

Gemäß einer vorteilhaften Ausgestaltung weist die Abtransportstation eine Auslaufstation und eine zweite Pufferstation auf. Die Auslaufstation ist dazu eingerichtet, einzelne Trägereinheiten aus der Entladestation individuell und unabhängig voneinander mittels des Fördersystems aufzunehmen. Nachdem eine auf einer Trägereinheit angeordnete Batterieeinheit entladen wurde, kann diese Trägereinheit individuell in die Auslaufstation transportiert werden. Die zweite Pufferstation ist als eine Staustation bzw. Staustrecke vorgesehen und dazu eingerichtet, in der Auslaufstation aufgenommene Trägereinheiten mittels des Fördersystems aufzunehmen und zwischenzulagern. Zweckmäßigerweise können die in der zweiten Pufferstation zwischengelagerten Trägereinheiten mittels des Fördersystems kontinuierlich und nacheinander in die Entnahmestation transportiert werden. Besonders vorteilhaft werden alle Trägereinheiten aus der Auslaufstation gemeinsam in die zweite Pufferstation transportiert. Wenn beispielsweise mehrere Batterieeinheiten zeitgleich ausreichend entladen sind, können die entsprechenden Trägereinheiten zweckmäßigerweise zeitgleich in die Auslaufstation transportiert werden und von dort gemeinsam in die zweite Pufferstation transportiert werden. Wenn jedoch in der zweiten Pufferstation nicht ausreichen freie Plätze vorhanden sind, um alle aus der Entladestation abzutransportierenden Trägereinheiten aufzunehmen, wird zunächst mit dem Transport dieser abzutransportierenden Trägereinheiten in die Auslaufstation gewartet, bis ausreichen Platz in der zweiten Pufferstation vorhanden ist. Auf diese Weise kann erreicht werden, dass in der Auslaufstation kein Stau von abzutransportierenden Trägereinheiten entsteht, bis diese auf freie Plätze in der zweiten Pufferstation bzw. Staustation abtransportiert werden können. Somit kann die Auslaufstation stets freigehalten werden, so dass in einem sicherheitskritischen Notfall eine defekte Batterieeinheit sofort aus der Entladestation in die Sicherheitsstation abtransportiert werden kann. Zweckmäßigerweise ist die Auslaufstation dazu eingerichtet, einzelne Trägereinheiten aus der Entladestation mittels des Fördersystems direkt und unmittelbar aufzunehmen, wobei diese Trägereinheiten aus der Auslaufstation direkt und unmittelbar mittels des Fördersystems zu der Sicherheitsstation transportierbar sind. Zweckmäßigerweise kann die Auslaufstation direkt zu der Sicherheitsstation hinführen, so dass in einem Notfall eine defekte Batterieeinheit auf kürzestem und schnellstmöglichem Weg zur Sicherheitsstation transportiert werden kann.

Gemäß einer bevorzugten Ausgestaltung weist die Auslaufstation eine oder mehrere Auslaufeinheiten auf, wobei jede dieser Auslaufeinheiten jeweils dazu eingereicht ist, eine Trägereinheit von einer der Entladeeinheiten der Entladestation mittels des Fördersystems aufzunehmen. Bevorzugt ist jeweils eine der Auslaufeinheiten einer der Entladeeinheiten und folglich einer der Puffereinheiten zugewiesen. Jeweils einander zugewiesene Puffereinheiten, Entladeeinheiten und Auslaufeinheiten sind bevorzugt über die jeweiligen Fördereinheiten des Fördersystems gekoppelt. Insbesondere sind die einzelnen Auslaufeinheiten in der ersten Richtung nebeneinander angeordnet und einander zugewiesene Puffereinheiten, Entladeeinheiten und Auslaufeinheiten sind in der zweiten Richtung jeweils nebeneinander bzw. voreinander angeordnet. Einzelne Batterieeinheiten können somit aus den Puffereinheiten in der zweiten Richtung direkt und unmittelbar in die jeweilige zugewiesene Entladeeinheit nachrücken sobald die zuvor in dieser jeweiligen Entladeeinheit aufgenommene Trägereinheit in der zweiten Richtung in die jeweilige zugewiesene Auslaufeinheit transportiert wurde. Ferner kann die Sicherheitsstation insbesondere in der ersten Richtung benachbart zu den Auslaufeinheiten angeordnet sein.

Vorteilhafterweise sind die Pufferstation, die Entladestation und die Abtransportstation innerhalb eines geschützten Bereichs angeordnet, z.B. innerhalb eine Schutzzauns. Besonders zweckmäßig sind die Beladestation und die Entnahmestation, in welcher die Batterieeinheiten durch einen Bediener manuell auf den Trägereinheiten angeordnet und von diesen entnommen werden, außerhalb dieses geschützten Bereichs angeordnet. Beispielsweise kann innerhalb des geschützten Bereichs ein Hochspannungsbereich definiert werden, in welchem bei der Entladung der Batterieeinheiten Hochspannungen auftreten können, beispielsweise von 75V bis zu 1000V. Außerhalb des geschützten Bereichs kann insbesondere ein Niederspannungsbereich definiert werden, in welchem bei der manuellen Handhabung der Batterieeinheiten niedrige Spannungen von z.B. unter 75V auftreten können. Durch den automatisierten Abtransport der Trägereinheiten von der Beladestation mittels des Fördersystems in den geschützten Bereich, durch die automatisierte Verarbeitung der Trägereinheiten innerhalb des geschützten Bereichs und durch den automatisierten Transport der Trägereinheiten mittels des Fördersystems aus dem geschützten Bereich zu der Entnahmestation kann besonders zweckmäßig eine Sicherheit der Bediener gewährleistet werden. Insbesondere kann ein Berührschutz gewährleistet werden, so dass eine Berührung der Hochspannung und die Gefahr eines Stromschlags innerhalb des geschützten Bereichs ausgeschlossen werden.

Die Erfindung betrifft ferner ein Verfahren zum Betreiben einer oben erfindungsgemäßen Vorrichtung zum Entladen von Batterieeinheiten. Vorteile und vorteilhafte Ausgestaltungen der erfindungsgemäßen Vorrichtung und des erfindungsgemäßen Verfahrens ergeben sich aus der vorliegenden Beschreibung in entsprechender Weise.

Das vorliegende Verfahren umfasst ein Anordnen von jeweils einer Batterieeinheit auf einzelnen der Trägereinheiten und ein elektrisches Kontaktieren der einzelnen Trägereinheiten mit der jeweiligen darauf angeordneten Batterieeinheit, insbesondere als einen manuellen Arbeitsschritt in der Beladestation.

Ferner erfolgt ein Transportieren einzelner Trägereinheiten, auf welchen jeweils eine Batterieeinheit angeordnet ist, mittels des Fördersystems in die Pufferstation und ein Zwischenlagern dieser Trägereinheiten in Pufferstation. Die Trägereinheiten können im Zuge dessen insbesondere in die einzelnen Puffereinheiten verteilt werden, zweckmäßigerweise bis in jeder Puffereinheit jeweils eine Trägereinheit bereitsteht. Dieses Transportieren und Verteilen auf die einzelnen Puffereinheiten erfolgt insbesondere automatisiert und kann von einer Steuereinheit der Vorrichtung gesteuert werden. Die Steuereinheit stellt insbesondere sicher, dass immer genügend Trägereinheiten zum Nachrücken zur Verfügung stehen, so dass die Entladestation einen kontinuierlichen Entladestrom bereitstellen kann.

Es erfolgt ferner ein Transportieren einzelner Trägereinheiten individuell und unabhängig voneinander mittels des Fördersystems aus der Pufferstation in die Entladestation. Einzelne Trägereinheiten können aus ihrer jeweiligen Puffereinheit in die zugewiesene Entladeeinheit nachrücken. Auch dieses Nachrücken erfolgt insbesondere automatisiert und wird zweckmäßigerweise von der Steuereinheit gesteuert.

Es wird eine elektrische Kontaktierung zwischen der Kontaktierungsanordnung und den in der Entladestation aufgenommenen Trägereinheiten erzeugt und es wird eine Reihenschaltung der Batterieeinheiten erzeugt, die auf diesen elektrisch kontaktierten Trägereinheiten angeordnet sind. Das Kontaktieren kann automatisiert durch Bewegen der einzelnen Kontaktelemente auf die in den Entladeeinheiten aufgenommenen Trägereinheiten erfolgen, insbesondere gesteuert von der Steuereinheit. Die Reihenschaltung wird insbesondere durch Ansteuern der einzelnen Schaltereinheiten der Schalteranordnung erzeugt, insbesondere von der Steuereinheit gesteuert.

Die Batterieeinheiten der Reihenschaltung werden mit Hilfe der Kontaktierungsanordnung entladen, insbesondere mit Hilfe der Entladeschaltung. Der Entladevorgang jeder einzelnen Batterieeinheit kann durch die Steuereinheit überwacht und gesteuert werden. Insbesondere kann die den Batterieeinheiten entnommen Energie kontrolliert der weiteren Verwendung zur Verfügung gestellt werden.

Die elektrischen Kontaktierung zwischen der Kontaktierungsanordnung und einzelnen in der Entladestation aufgenommenen Trägereinheiten wird individuell und unabhängig voneinander getrennt und die auf diesen jeweiligen Trägereinheiten angeordneten Batterieeinheiten werden individuell und unabhängig voneinander aus der Reihenschaltung entfernt, zweckmäßigerweise ohne dass die Reihenschaltung dabei unterbrochen wird, jeweils wenn ein vorgegebenes Ereignis eintritt, welches ein ausreichendes Entladen der auf diesen jeweiligen Trägereinheiten angeordneten Batterieeinheit charakterisiert. Wenn also erkannt wird, dass eine Batterieeinheit vollständig entladen ist, wird diese Batterieeinheit durch Ansteuern der Schalteranordnung wieder aus der Reihenschaltung entfernt und das jeweilige Kontaktelement der Kontaktierungsanordnung wird von der jeweiligen Trägereinheit wegbewegt.

Die jeweiligen Trägereinheiten, deren elektrische Kontaktierung zu der Kontaktierungsanordnung getrennt wurde, werden dann individuell und unabhängig voneinander mittels des Fördersystems aus der Entladestation in die Abtransportstation transportiert, insbesondere automatisiert und gesteuert durch die Steuereinheit. Diese Trägereinheiten können dann zu der Entnahmestation transportiert werden, wo die entladenen Batterieeinheiten entnommen werden. Die leeren Trägereinheiten werden dann wieder der Beladestation zugeführt.

Beispielsweise kann zum Erkennen dieses Ereignisses ein Spannungsverlauf der einzelnen Batterieeinheiten überwacht werden. Das vorgegebene Ereignis kann insbesondere einen Verlust der elektrochemischen Eigenschaft bzw. des Vermögens der jeweiligen Batterieeinheit charakterisieren, Ladung bzw. Ladungsträger in der Batterieeinheit zu speichern. Das vorgegebene Ereignis charakterisiert dann insbesondere das Inaktivieren der jeweiligen Batterieeinheit und den Verlust des Speicherverhaltens bzw. des Speichervermögens der Batterieeinheit und charakterisiert zweckmäßigerweise eine Zerstörung der Batterieeinheit. Im Zuge der (Tief-) Entladung werden zweckmäßigerweise zuerst die Ladungsträger verarmt und danach die innere Speicherstruktur der Batterieeinheiten zerstört. Das führt insbesondere dazu, dass die Batterieeinheiten ab einem gewissen Zustand ihre Hauptfunktion verlieren und nicht mehr geladen bzw. entladen werden können. Eine Rückkehr der Batteriespannung ist dann insbesondere nicht mehr möglich. Die derartig tiefentladenen Batterieeinheiten können dann zweckmäßigerweise einem Recyclingprozess zugeführt werden, so dass eine Prozesssicherheit, insbesondere ein Arbeits- und Brandschutz, gewährleistet werden kann. Durch eine derartige definierte Entnahme der Ladung aus den Batterieeinheiten kann insbesondere ein definierter Tiefentladezustand erreicht werden.

So kann das vorgegebene Ereignis beispielsweise eintreten, wenn eine Messgröße der jeweiligen Batterieeinheit, z.B. ein Ladezustand oder ein Spannungswert, einen vorgegebenen Schwellwert erreicht, z.B. 0% Ladezustand oder 0V Klemmenspannung, und wenn nach Erreichen dieses Schwellwerts ein weiteres Entladen der Batterieeinheit erfolgt, bis der Batterieeinheit eine vorgegebene Ladungsmenge entzogen wurde. Ferner kann das das vorgegebene Ereignis beispielsweise eintreten, wenn ein Spannungsverlauf der jeweiligen Batterieeinheit ein vorgegebenes Merkmal aufweist, beispielsweise bis der Spannungsverlauf einen konstanten oder zumindest im Wesentlichen konstanten, negativen Sättigungsspannungswert erreicht.

Vorteilhafterweise erfolgt ferner ein Transportieren bzw. ein automatisiertes Nachrücken einer Trägereinheit aus einer der Puffereinheiten in die jeweils zugewiesene Entladeeinheit, sobald die zuvor in diese Entladeeinheit transportierte Trägereinheit mittels des Fördersystems in die Abtransportstation transportiert wird, insbesondere in die jeweils zugeordnete Auslaufeinheit. Somit erfolgt nach dem vollständigen Entladen einer Batterieeinheit und dem Abtransport der jeweiligen Trägereinheit möglichst zeitnah ein Nachrücken einer neuen zu entladenden Batterieeinheit. Besonders zweckmäßig stellt die Steuereinheit sicher, dass entlade Batterieeinheiten unmittelbar nach Erreichen der elektrochemischen Inaktivität in der Entladeeinheit ausgetauscht werden.

Vorzugsweise werden eine Spannung und eine Temperatur von auf den kontaktierten Trägereinheiten angeordneten Batterieeinheiten in der Entladeeinheit bestimmt und überwacht. Anhand der Spannung, insbesondere einer Klemmenspannung zwischen Anschlussklemmen der jeweiligen Batterieeinheit, kann insbesondere auf deren aktuellen Ladezustand rückgeschlossen werden. Insbesondere kann anhand dieser Spannung das Eintreten des jeweiligen Ereignisses erkannt werden, welches ein ausreichendes Entladen der jeweiligen Batterieeinheit charakterisiert. Mit Hilfe der bestimmten Temperatur können die einzelnen Batterieeinheiten insbesondere auf das Eintreten von sicherheitskritischen Notfällen überwacht werden. Ferner können Spannung und Temperatur insbesondere zur Steuerung bzw. Regelung des Entladeprozesses verwendet werden.

Bevorzugt wird ein Entladestrom zum Entladen der auf der kontaktierten Trägereinheit angeordneten Batterieeinheit in der Entladeeinheit geregelt. Insbesondere kann durch Ansteuerung der Entladeschaltung eine entsprechende Stromregelung durchgeführt werden, insbesondere derart, dass ein konstanter (Entlade-) Strom aus den einzelnen Batterieeinheiten der Reihenschaltung entnommen wird.

Vorteilhafterweise wird eine Entladegeschwindigkeit zum Entladen der auf der kontaktierten Trägereinheit angeordneten Batterieeinheit gesteuert. Beispielsweise kann diese Steuerung abhängig von der Temperatur, der Spannung und/oder dem Stromfluss der einzelnen Batterieeinheiten erfolgen.

Die Erfindung eignet sich zweckmäßigerweise für eine Vielzahl unterschiedlicher Batterieeinheiten, insbesondere für Batterieeinheiten aus dem (Kraft- bzw. Elektro-) Fahrzeugbereich oder der elektrischen Antriebstechnik. Beispielsweise können einzelne Batterieeinheiten jeweils eine sog. Batteriezelle sein, als welche eine kleinste in einem Fahrzeug verbaute Batterieeinheit verstanden wird, welche beispielsweise eine Zellenspannung zwischen 2,5V und 4,4V aufweisen kann. Ferner können einzelne Batterieeinheit jeweils beispielsweise als ein Batteriemodul ausgebildet sein, als welches insbesondere eine Reihenschaltung mehrerer derartiger Batteriezellen verstanden wird, welche z.B. eine Nennspannung von bis zu 60V aufweisen kann. Beispielsweise können einzelne Batterieeinheiten auch jeweils ein Batteriepack sein, als welches eine Reihenschaltung aus einer Vielzahl von derartigen Batteriemodulen bezeichnet wird, welche z.B. eine Nennspannung von 200V bis zu 1000V aufweisen kann.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt schematisch eine bevorzugte Ausgestaltung einer erfindungsgemäßen Vorrichtung.
- Figur 2: zeigt schematisch eine Trägereinheit einer bevorzugten Ausgestaltung einer erfindungsgemäßen Vorrichtung.
- Figur 3: zeigt schematisch Elemente einer Kontaktierungsanordnung einer bevorzugten Ausgestaltung einer erfindungsgemäßen Vorrichtung.

### Detaillierte Beschreibung der Zeichnung

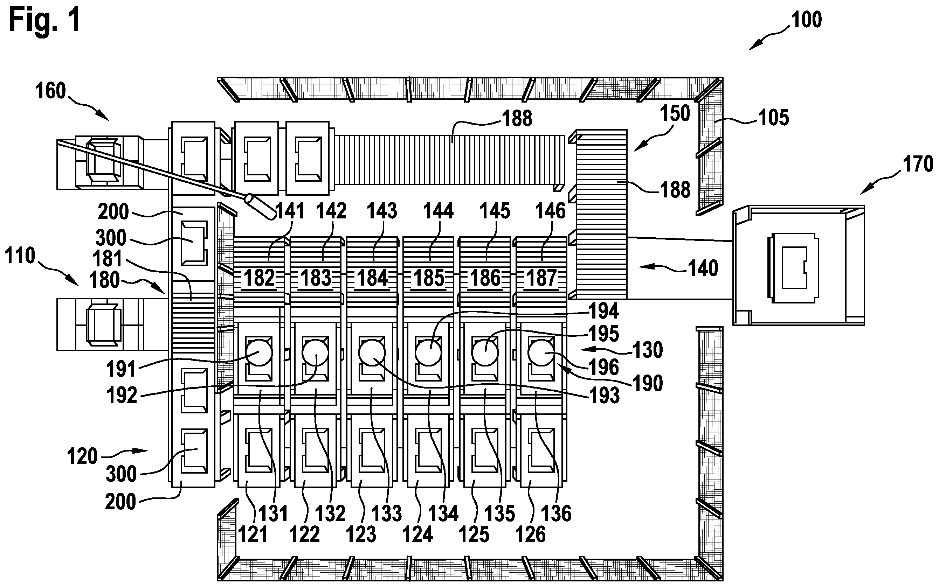

In Figur 1 ist eine bevorzugte Ausgestaltung einer erfindungsgemäßen Vorrichtung zum Entladen von Batterieeinheiten in einer schematischen Draufsicht dargestellt und mit 100 bezeichnet.

Die Vorrichtung 100 weist eine Vielzahl von Trägereinheiten 200 auf, auf welchen jeweils eine Batterieeinheit 300 angeordnet und elektrisch kontaktiert werden kann. Mittels eines Fördersystems 180 können diese einzelnen Trägereinheiten 200 zwischen verschiedenen Stationen transportiert werden. Zu diesem Zweck weist das Fördersystem 180 eine Vielzahl einzelner Fördereinheiten auf, beispielsweise jeweils in der Form von einzelnen Förderbändern oder Förderwalzen, welche individuell und unabhängig voneinander angesteuert werden können. Es versteht sich, dass auch andere Fördereinheiten, beispielsweise auch in-Form selbstfahrender Trägereinheiten, vorgesehen sein können.

In einer Beladestation 110 kann nacheinander auf einzelnen Trägereinheiten 200 jeweils eine Batterieeinheit 300 angeordnet und kontaktiert werden kann. Beispielsweise kann diese Beladestation 110 als ein Handarbeitsplatz vorgesehen sein. Mittels des Fördersystems 180, insbesondere mittels einer ersten Fördereinheit 181, werden entsprechend beladene Trägereinheiten 200 von der Beladestation zu einer Pufferstation 120 transportiert. In dieser Pufferstation 120 werden einzelne Trägereinheiten 200 zwischengelagert. Die Pufferstation 120 weist eine Vielzahl von Puffereinheiten 121, 122, 123, 124, 125, 126 auf, wobei jede dieser Puffereinheiten 121, 122, 123, 124, 125, 126 jeweils dazu eingereicht ist, eine Trägereinheit 200 zwischenzulagern.

Eine Entladestation 130 weist eine Vielzahl von Entladeeinheiten 131, 132, 133, 134, 135, 136 auf, wobei jede dieser Entladeeinheiten 131, 132, 133, 134, 135, 136 jeweils dazu eingereicht ist, eine Trägereinheit 200 von einer der Puffereinheiten 121, 122, 123, 124, 125, 126 aufzunehmen. Aus der Pufferstation werden einzelne Trägereinheiten 200 individuell und unabhängig voneinander mittels des Fördersystems 180 in die Entladestation 130 transportiert, insbesondere immer dann, wenn in der Entladestation eine entsprechende. Entladeeinheit frei ist bzw. wird. Dazu ist jeweils eine der Puffereinheiten 121, 122, 123, 124, 125, 126 jeweils einer der Entladeeinheiten 131, 132, 133, 134, 135, 136 zugewiesen. Einander zugewiesene Puffereinheiten und Entladeeinheiten sind jeweils über eine Fördereinheit 182, 183, 184, 185, 186, 187 des Fördersystems 180 gekoppelt. Im Beispiel von Figur 1 sind jeweils die in vertikaler Richtung benachbarten Puffereinheiten 121, 122, 123, 124, 125, 126 und Entladeeinheiten 131, 132, 133, 134, 135, 136 einander zugeordnet und jeweils über eine Fördereinheit gekoppelt.

Eine Kontaktierungsanordnung 190 ist dazu eingerichtet, eine elektrische Kontaktierung zu in der Entladestation aufgenommenen Trägereinheiten 200 derart zu erzeugen, dass eine Reihenschaltung von Batterieeinheiten 300 erzeugt wird, die auf diesen elektrisch kontaktierten Trägereinheiten 200 angeordnet sind. Ferner ist die Kontaktierungsanordnung 190 dazu eingerichtet, Batterieeinheiten 300 dieser Reihenschaltung zu entladen und die elektrische Kontaktierung zu einzelnen Trägereinheiten 200 individuell und unabhängig voneinander zu trennen, so dass die auf diesen Trägereinheiten angeordneten Batterieeinheiten 300 individuell und unabhängig voneinander aus der Reihenschaltung entfernt werden.

Mit Hilfe der Kontaktierungsanordnung 190 kann eine Vielzahl von in der Entladestation 130 angeordneten Batterieeinheiten 300 in eine Reihenschaltung integriert und zeitgleich entladen werden. Wenn ein vorgegebenes Ereignis eintritt, welches ein ausreichendes Entladen einer dieser in der Entladestation 130 angeordneten, in Reihe geschalteten Batterieeinheiten 300 charakterisiert, wird die elektrischen Kontaktierung zwischen der Kontaktierungsanordnung 190 und der Trägereinheit dieser ausreichend entladenen Batterieeinheit 300 getrennt und diese Batterieeinheit 300 wird aus der Reihenschaltung entfernt, ohne dass es zu einer Unterbrechung der Reihenschaltung kommt. Die Reihenschaltung bleibt erhalten und die restlichen Batterien werden weiter entladen.

Die Kontaktierungsanordnung weist für jede Entladeeinheit 131, 132, 133, 134, 135, 136 jeweils bewegliche Kontaktelemente 191, 192, 193, 194, 195, 196 auf, beispielsweise bewegliche Kontaktbolzen, die jeweils auf eine in der jeweiligen Entladeeinheit 131, 132, 133, 134, 135, 136 angeordnete Trägereinheit 200 zubewegt werden können, bis sie diese Trägereinheit 200 berühren, wodurch eine elektrische Kontaktierung zu der Trägereinheit 200 und der darauf angeordneten Batterieeinheit 300 hergestellt wird. Durch entsprechendes Wegbewegen der Kontaktelemente 191, 192, 193, 194, 195, 196 wird die elektrische Kontaktierung zu der jeweiligen Batterieeinheit 300 wieder getrennt.

Eine Abtransportstation ist dazu eingerichtet, einzelne Trägereinheiten 200 aus der Entladestation individuell und unabhängig voneinander mittels des Fördersystems 180 abzutransportieren. Eine Trägereinheit 200, deren elektrische Kontaktierung zu der Kontaktierungsanordnung 190 getrennt wurde, kann somit individuell und unabhängig von den anderen Trägereinheiten mittels des Fördersystems 180 aus der Entladestation 130 abtransportiert werden. Diese Abtransportstation weist eine Auslaufstation 140 und eine zweite Pufferstation 150 auf. Einzelne Trägereinheiten 200 können aus der Entladestation 130 individuell und unabhängig voneinander mittels des Fördersystems 180 in die Auslaufstation 140 transportiert werden. In der Auslaufstation 140 aufgenommene Trägereinheiten 200 können mittels einer Fördereinheit 188 des Fördersystems 180 in die zweite Pufferstation 150 transportiert und dort zwischengelagert werden, insbesondere alle Trägereinheiten 200 aus der Auslaufstation 140 gemeinsam.

Die Auslaufstation 140 weist eine Vielzahl von Auslaufeinheiten 141, 142, 143, 144, 145, 146 auf. Jede dieser Auslaufeinheiten 141, 142, 143, 144, 145, 146 ist jeweils dazu eingerichtet, eine Trägereinheit 200 von einer der Entladeeinheiten der Entladestation 120 aufzunehmen. Jeweils eine der Auslaufeinheiten 141, 142, 143, 144, 145, 146 ist jeweils einer der Entladeeinheiten 131, 132, 133, 134, 135, 136 zugewiesen. Jeweils einander zugewiesene Entladeeinheiten 131, 132, 133, 134, 135, 136 und Auslaufeinheiten 141, 142, 143, 144, 145, 146 sind über jeweilige gemeinsamen Fördereinheiten 182, 183, 184, 185, 186, 187 des Fördersystems gekoppelt. Insbesondere können jeweils einander zugewiesene Puffereinheiten 121, 122, 123, 124, 125, 126, Entladeeinheiten 131, 132, 133, 134, 135, 136 und Auslaufeinheiten 141, 142, 143, 144, 145, 146 über die jeweiligen gemeinsamen Fördereinheiten 182, 183, 184, 185, 186, 187 des Fördersystems gekoppelt sein, so dass gleichzeitig ein Überführen einer zu entladenden Transporteinheit aus einer Puffereinheit in eine Entladeeinheit, und einer entladenen Transporteinheit aus dieser Entladeeinheit in eine Auslaufeinheit erfolgt.

Ferner ist eine Sicherheitsstation 170 vorgesehen und dazu eingerichtet, einzelne Trägereinheiten 200 aus der Entladestation 130 mittels des Fördersystems 180 aufzunehmen und mittels Sicherheitsmechanismen zu beaufschlagen. Bei einem sicherheitskritischen Notfall, z.B. bei einem Brand einer Batterieeinheit 300 oder wenn in einer Batterieeinheit 300 eine irreversible, unerwünschte chemische Reaktion auftritt, kann diese defekte Batterieeinheit 300 sofort aus der Entladeeinheit 120 entfernt und in die Sicherheitsstation 170 transportiert werden. Die Sicherheitsmechanismen können dort dem Notfall entgegenwirken und beispielsweise ein brandhemmendes Gelbad und eine Löscheinrichtung umfassen. Die Auslaufstation 140 geht insbesondere direkt in die Sicherheitsstation 170 über. Es werden insbesondere nur so viele Trägereinheiten von der Entladestation 130 in die Auslaufstation 140 transportiert, wie auch gemeinsam von der zweiten Puffereinheit 150 aufgenommen werden können. Wenn in der zweiten Pufferstation 150 nicht ausreichend freie Plätze vorhanden sind, um alle aus der Entladestation 130 abzutransportierenden Trägereinheiten 200 aufzunehmen, wird mit dem Transport dieser abzutransportierenden Trägereinheiten 200 in die Auslaufstation 140 gewartet, bis ausreichen Platz in der zweiten Pufferstation 150 vorhanden ist. Somit kann in der Auslaufstation 140 kein Stau von abzutransportierenden Trägereinheiten 200 entstehen und die Auslaufstation 140 kann stets freigehalten werden, so dass in einem sicherheitskritischen Notfall eine defekte Batterieeinheit 300 sofort aus der Entladestation 120 in die Sicherheitsstation 170 abtransportiert werden kann.

Die in der zweiten Puffereinheit 150 zwischengelagerten Trägereinheiten 200 mit den darauf angeordneten entladenen Batterieeinheiten 300 werden nacheinander einer Entnahmestation 160 zugeführt, in welcher die entladenen Batterieeinheiten 300 von der jeweiligen Trägereinheit elektrisch getrennt und entnommen werden können. Die entleerten Trägereinheiten 200 können dann über die erste Fördereinheit 181 wieder der Beladestation 110 zugeführt werden. Wie die Beladestation 110 kann auch die Entnahmestation 160 ein Handarbeitsplatz sein.

Die Pufferstation 120, die Entladestation 130, die Auslaufstation 140 und die zweite Pufferstation 150 sind vorzugsweise innerhalb eines geschützten Bereichs in Form eines Schutzzauns 105 angeordnet. Die Handarbeitsplätze in Form der Beladestation 110 und der Entnahmestation 160 sind somit außerhalb dieses Schutzzauns 105 angeordnet, so dass Bediener in diesen Stationen 110, 160 vor Hochspannungen usw. während der Batterieentladung geschützt sind.

Die Vorrichtung 100 ermöglicht es somit, einzelne Batterieeinheiten 300 individuell und je nach Bedarf der Entladestation 130 zu deren Entladung zuzuführen, nach deren Entladung individuell wieder aus der Entladestation 130 zu entfernen und eine neue zu entladende Batterieeinheit 300 nachrücken zu lassen. In der Pufferstation 120 können ausreichend Batterieeinheiten 300 bereitgestellt werden, um ein kontinuierliches Nachrücken in die Entladestation 120 sicherzustellen. Dadurch, dass mittels der Kontaktierungsanordnung 190 eine Reihenschaltung der in der Entladestation 130 angeordneten Batterieeinheiten 300 erzeugt werden kann, dass einzelne Batterieeinheiten 300 dieser Reihenschaltung hinzugefügt und wieder aus dieser Reihenschaltung entfernt werden können, ohne dabei die Reihenschaltung zu unterbrechen, kann ein kontinuierlicher Stromfluss zur Batterieentladung erzeugt und aufrechterhalten werden. Auf diese Weise wird eine kontinuierliche Entladung von Batterieeinheiten 300 ermöglicht, welche automatisiert individuell ausgetauscht und nachgerückt werden können.

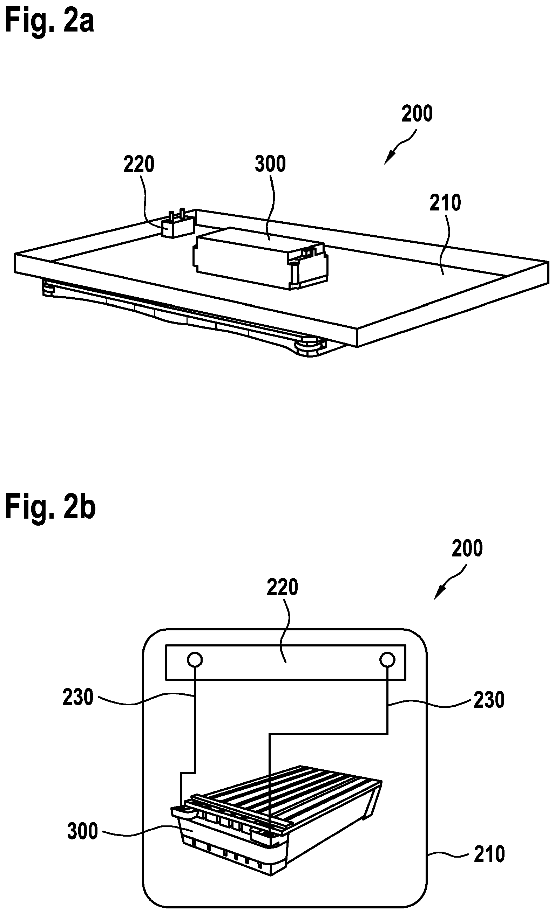

Eine der Trägereinheiten 200 der Vorrichtung 100 ist gemäß einer bevorzugten Ausgestaltung der Erfindung in Figur 2a in einer schematischen perspektivischen Ansicht und in Figur 2b in einer schematischen Draufsicht dargestellt. Die Trägereinheit 200 weist einen Trägerboden 210 auf, auf welchem die Batterieeinheit 300 angeordnet werden kann. Auf dem Trägerboden 210 ist ein festes Kontaktelement 220 vorgesehen, welches über flexible, nicht-starre Leitungsverbindung 230 mit Polen der Batterieeinheit 300 elektrisch verbunden werden kann. Dieses Anordnen der Batterieeinheit 300 und das elektrische Verbinden der Batterieeinheit 300 mit dem festen Kontaktelement 220 kann zweckmäßigerweise manuell in der Beladestation 110 erfolgen. Die einzelnen beweglichen Kontaktelemente 191, 192, 193, 194, 195, 196 der Kontaktierungsanordnung 190 sind jeweils dazu eingerichtet, das Kontaktelement 220 der Trägereinheit 200 zu berühren und somit den elektrischen Kontakt zu der Batterieeinheit 300 herzustellen.

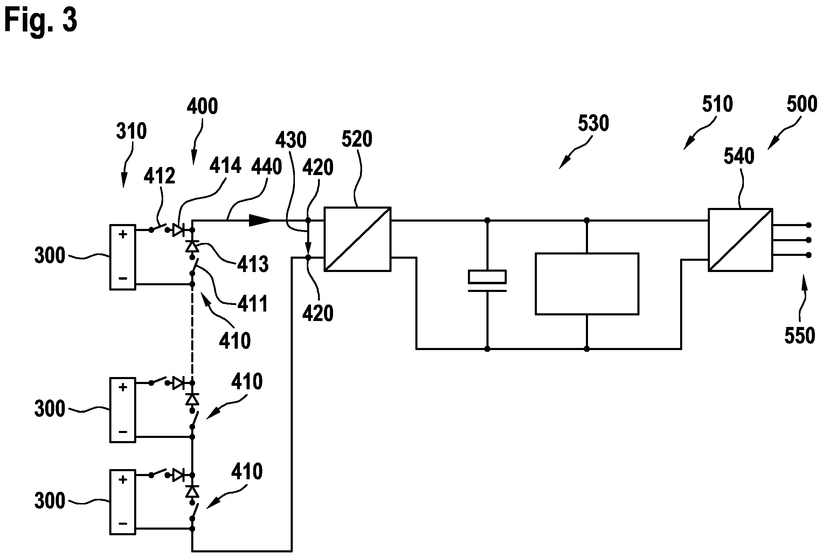

Die Kontaktelemente 191, 192, 193, 194, 195, 196 stellen eine mechanische Komponente der Kontaktierungsanordnung 190 dar, um die elektrische Kontaktierung zu den Batterieeinheiten 300 herzustellen. Die Kontaktierungsanordnung 190 weist ferner elektrische Komponenten auf, um die Batterieeinheiten flexibel in die Reihenschaltung integrieren zu können und wieder von dieser trennen zu können, wie nachfolgend anhand von Figur 3 erläutert wird.

Figur 3 zeigt Elemente einer Kontaktierungsanordnung 190 gemäß einer bevorzugten Ausgestaltung der Erfindung in einem vereinfachten, schematischen, elektrischen Schaltbild.

Die Kontaktierungsanordnung 190 weist eine Schalteranordnung 400 auf, die dazu eingerichtet ist, eine entsprechende Reihenschaltung 310 aus einer Vielzahl von Batterieeinheiten 300 zu erzeugen. Zu diesem Zweck weist die Schalteranordnung 400 für jede Batterieeinheit 300 jeweils eine Verbindungsschaltung 410 auf mit zwei Schalterelementen 411, 412 und zwei Dioden 413, 414, wobei die Diode 414 optional ist. Beispielsweise kann jeweils eine dieser Verbindungsschaltungen 410 in jeweils eines der beweglichen Kontaktelemente 191, 192, 193, 194, 195, 196 integriert sein.

Ein erstes dieser Schalterelemente 411 kann parallel zu der jeweiligen Batterieeinheit 300 geschaltet werden und ein zweites dieser Schalterelemente 412 in Reihe zu der jeweiligen Batterieeinheit 300. Durch Ansteuern der Schalterelemente 411, 412 kann die jeweilige Batterieeinheit 300 flexibel mit der Reihenschaltung 310 verbunden und wieder von dieser getrennt werden, ohne dass die Reihenschaltung 310 dabei unterbrochen wird, so dass ein konstanter Stromfluss 440 aufrechterhalten wird. Wenn wenigstens eine Batterieeinheit 300 in die Reihenschaltung 310 integriert ist, wird an Gleichspannungsanschlüsse 420 der Schalteranordnung 400 eine Gleichspannung 430 bereitgestellt.

Die Kontaktierungsanordnung 190 weist ferner eine Entladeschaltung 500 auf, die dazu eingerichtet ist, die Batterieeinheiten 300 der Reihenschaltung 310 zu entladen. Beispielsweise kann die Entladeschaltung 500 zu diesem Zweck eine Stromquelle und -senke 510 aufweisen, um aus der Reihenschaltung 310 den konstanten Stromfluss 440 zu entnehmen und um die aus den Batterieeinheiten 300 entnommene Energie in ein Spannungsnetz einzuspeisen. Diese Stromquelle und -senke 510 kann beispielsweise als eine Stromrichterschaltung vorgesehen sein, um die an den Gleichspannungsanschlüssen 420 der Schalteranordnung 400 bereitgestellte Gleichspannung 430 in eine Wechselspannung zur Bereitstellung für ein Wechselspannungsnetz umwandeln. Zu diesem Zweck kann die Stromrichterschaltung 510 beispielsweise einen Gleichspannungswandlerschaltung 520, einen Gleichspannungszwischenkreis 530 und eine Wechselrichterschaltung 540 aufweisen. An Phasenanschlüsse 550 kann die erzeugte Wechselspannung bereitgestellt und in das Wechselspannungsnetz eingespeist werden.

Im Zuge der Entladung mit Hilfe der Entladeschaltung 500 wird ferner eine Spannung der einzelnen Batterieeinheiten 300 überwacht, beispielsweise eine Klemmenspannung zwischen Anschlussklemmen der einzelnen Batterieeinheiten 300. Diese Spannung wird auf das Eintreten des Ereignisses untersucht, welches ein ausreichendes Entladen der jeweiligen Batterieeinheiten 300 charakterisiert. Insbesondere charakterisiert dieses Ereignis den Verlust der elektrochemischen Eigenschaft bzw. des Vermögens der jeweiligen Batterieeinheit 300, Ladung bzw. Ladungsträger zu speichern. Beispielsweise kann das vorgegebene Ereignis eintreten, wenn der Spannungswert der Klemmenspannung einen vorgegebenen Schwellwert von z.B. 0V erreicht und wenn der jeweiligen Batterieeinheit 300 nach Erreichen dieses Schwellwerts weiterhin eine vorgegebene Ladungsmenge entzogen wurde. Ferner kann das vorgegebene Ereignis beispielsweise eintreten, wenn ein Verlauf der Klemmenspannung als ein vorgegebenes Merkmal einen konstanten oder zumindest im Wesentlichen konstanten, negativen Sättigungsspannungswert erreicht.

## Patentansprüche

1. Vorrichtung (100) zum Entladen von Batterieeinheiten (300), aufweisend:
eine Vielzahl von Trägereinheiten (200), wobei auf jeder der Trägereinheiten (200) jeweils eine Batterieeinheit (300) angeordnet und elektrisch kontaktiert werden kann;
ein Fördersystem (180), dazu eingerichtet, einzelne der Trägereinheiten (200) zu transportieren;
eine Pufferstation (120), dazu eingerichtet, eine Anzahl der Trägereinheiten (200) aufzunehmen und zwischenzulagern;
eine Entladestation (130), dazu eingerichtet, einzelne Trägereinheiten (200) aus der Pufferstation (120) aufzunehmen;
eine Abtransportstation (140, 150), dazu eingerichtet, einzelne Trägereinheiten (200) aus der Entladestation (130) abzutransportieren;
eine Kontaktierungsanordnung (190), dazu eingerichtet, eine elektrische Kontaktierung zu in der Entladestation (130) aufgenommenen Trägereinheiten (200) derart zu erzeugen, dass eine Reihenschaltung (310) von Batterieeinheiten (300) erzeugt wird, die auf diesen elektrisch kontaktierten Trägereinheiten (200) angeordnet sind, Batterieeinheiten (300) dieser Reihenschaltung (310) zu entladen und die elektrische Kontaktierung zu einzelnen Trägereinheiten (200) individuell und unabhängig voneinander zu trennen, so dass die auf diesen Trägereinheiten (200) angeordneten Batterieeinheiten (300) individuell und unabhängig voneinander aus der Reihenschaltung (310) entfernt werden,
wobei die Kontaktierungsanordnung (190) aufweist:
Kontaktelemente (191, 192, 193, 194, 195, 196), jeweils dazu eingerichtet, mit in der Entladestation (130) aufgenommenen Trägereinheiten (200) in Berührung gebracht zu werden und somit elektrisch kontaktiert zu werden;
eine Schalteranordnung (400) aufweisend eine Vielzahl von Schaltereinheiten (411, 412), dazu eingerichtet, die Reihenschaltung (310) von Batterieeinheiten (200) zu erzeugen, die auf den elektrisch kontaktierten Trägereinheiten (200) angeordnet sind; und
eine Entladeschaltung (500), dazu eingerichtet, Batterieeinheiten (300) der Reihenschaltung (3100) zu entladen.

2. Vorrichtung (100) nach Anspruch 1, wobei jede Trägereinheit (200) jeweils feste Kontaktelemente (220) und flexible Leitungsverbindungen (230) aufweist, wobei die festen Kontaktelemente (220) mit einer auf der Trägereinheit (200) angeordneten Batterieeinheit (300) über die flexiblen Leitungsverbindungen (230) elektrisch verbindbar sind.

3. Vorrichtung (100) nach einem der vorstehenden Ansprüche, ferner aufweisend eine Sicherheitsstation (170), dazu eingerichtet, einzelne Trägereinheiten (200) aus der Entladestation (130) aufzunehmen und mittels Sicherheitsmechanismen zu beaufschlagen.

4. Vorrichtung (100) nach einem der vorstehenden Ansprüche, wobei die Vorrichtung (100) ferner eine Beladestation (110) aufweist, in der auf einzelnen Trägereinheiten (200) jeweils eine Batterieeinheit (300) angeordnet und kontaktiert werden kann, wobei das Fördersystem (180) dazu eingerichtet ist, einzelne der Trägereinheiten (200) von der Beladestation (110) zu der Pufferstation (120) zu transportieren, und wobei die Pufferstation (120) dazu eingerichtet ist, einzelne der Trägereinheiten (200) von der Beladestation (110) aufzunehmen und zwischenzulagern, und/oder wobei die Vorrichtung (100) ferner eine Entnahmestation (160) aufweist, dazu eingerichtet, einzelne Trägereinheiten (200) aus der Abtransportstation (140, 150) zu empfangen, wobei in der Entnahmestation (160) in den empfangenen Trägereinheiten (200) angeordnete Batterieeinheiten (300) elektrisch von der jeweiligen Trägereinheit (200) getrennt und entnommen werden können.

5. Vorrichtung (100) nach einem der vorstehenden Ansprüche, wobei die Pufferstation (120) eine oder mehrere Puffereinheiten (121, 122, 123, 124, 125, 126) aufweist, wobei jede dieser Puffereinheiten (121, 122, 123, 124, 125, 126) jeweils dazu eingereicht ist, eine Trägereinheit (200) zwischenzulagern, wobei die Entladestation (130) eine oder mehrere Entladeeinheiten (131, 132, 133, 134, 135, 136) aufweist, wobei jede dieser Entladeeinheiten (131, 132, 133, 134, 135, 136) jeweils dazu eingereicht ist, eine Trägereinheit (200) von einer der Puffereinheiten (121, 122, 123, 124, 125, 126) der Pufferstation (120) aufzunehmen, wobei jeweils eine der Puffereinheiten (121, 122, 123, 124, 125, 126) einer der Entladeeinheiten (131, 132, 133, 134, 135, 136) zugewiesen ist und wobei einander zugewiesene Puffereinheiten (121, 122, 123, 124, 125, 126) und Entladeeinheiten (131, 132, 133, 134, 135, 136) jeweils über eine Fördereinheit (182, 183, 184, 185, 186, 187) des Fördersystems (180) gekoppelt sind.

6. Vorrichtung (100) nach einem der vorstehenden Ansprüche, wobei die Abtransportstation aufweist:
eine Auslaufstation (140), dazu eingerichtet, einzelne Trägereinheiten (200) aus der Entladestation (120) individuell und unabhängig voneinander aufzunehmen,
eine zweite Pufferstation (150), dazu eingerichtet, in der Auslaufstation (140) aufgenommene Trägereinheiten (200) aufzunehmen, insbesondere alle Trägereinheiten (200) aus der Auslaufstation (140) gemeinsam, und zwischenzulagern.

7. Vorrichtung (100) nach Anspruch 6, soweit rückbezogen auf Anspruch 5,
wobei die Auslaufstation (140) eine oder mehrere Auslaufeinheiten (141, 142, 143, 144, 145, 146) aufweist, wobei jede dieser Auslaufeinheiten (141, 142, 143, 144, 145, 146) jeweils dazu eingerichtet ist, eine Trägereinheit von einer der Entladeeinheiten (131, 132, 133, 134, 135, 136) der Entladestation (130) aufzunehmen,
wobei jeweils eine der Auslaufeinheiten (141, 142, 143, 144, 145, 146) einer der Entladeeinheiten (131, 132, 133, 134, 135, 136) zugewiesen ist und wobei jeweils einander zugewiesene Puffereinheiten (121, 122, 123, 124, 125, 126), Entladeeinheiten (131, 132, 133, 134, 135, 136) und Auslaufeinheiten (141, 142, 143, 144, 145, 146) über die jeweiligen Fördereinheiten (182, 183, 184, 185, 186, 187) des Fördersystems (180) gekoppelt sind.

8. Vorrichtung (100) nach einem der vorstehenden Ansprüche, wobei die Pufferstation (130), die Entladestation (130) und die Abtransportstation (140, 150) innerhalb eines geschützten Bereichs (105) angeordnet sind.

9. Verfahren zum Betreiben einer Vorrichtung (100) nach einem der vorstehenden Ansprüche, umfassend:
Anordnen von jeweils einer Batterieeinheit (300) auf einzelnen der Trägereinheiten (200) und elektrisches Kontaktieren der einzelnen Trägereinheiten (200) mit der jeweiligen darauf angeordneten Batterieeinheit (300);
Transportieren einzelner Trägereinheiten (200), auf welchen jeweils eine Batterieeinheit (300) angeordnet ist, mittels des Fördersystems (180) in die Pufferstation (120) und Zwischenlagern dieser Trägereinheiten (200) in Pufferstation (120);
Transportieren einzelner Trägereinheiten (200) individuell und unabhängig voneinander mittels des Fördersystems (180) aus der Pufferstation (120) in die Entladestation (130);
Erzeugen einer elektrischen Kontaktierung zwischen der Kontaktierungsanordnung (190) und den in der Entladestation (130) aufgenommenen Trägereinheiten (200) und Erzeugen einer Reihenschaltung (310) von Batterieeinheiten (300), die auf diesen elektrisch kontaktierten Trägereinheiten (200) angeordnet sind;
Entladen der Batterieeinheiten (300) dieser Reihenschaltung (310) mit Hilfe der Kontaktierungsanordnung (190);
Trennen der elektrischen Kontaktierung zwischen der Kontaktierungsanordnung (190) und einzelnen in der Entladestation (130) aufgenommenen Trägereinheiten (200) individuell und unabhängig voneinander und Entfernen der auf diesen jeweiligen Trägereinheiten (200) angeordneten Batterieeinheiten (300) individuell und unabhängig voneinander aus der Reihenschaltung (310), jeweils wenn ein vorgegebenes Ereignis eintritt, welches ein ausreichendes Entladen der auf diesen jeweiligen Trägereinheiten (200) angeordneten Batterieeinheit (300) charakterisiert;
Transportieren der jeweiligen Trägereinheiten (200), deren elektrische Kontaktierung zu der Kontaktierungsanordnung (190) getrennt wurde, individuell und unabhängig voneinander mittels des Fördersystems (180) aus der Entladestation (130) in die Abtransportstation (140, 150).

10. Verfahren nach Anspruch 9 soweit rückbezogen auf Anspruch 5, wenn die Pufferstation (120) eine oder mehrere Puffereinheiten (121, 122, 123, 124, 125, 126) aufweist und wenn die Entladestation (131, 132, 133, 134, 135, 136) eine oder mehrere Entladeeinheiten (131, 132, 133, 134, 135, 136) aufweist, ferner umfassend:
Transportieren einer Trägereinheit (200) aus einer der Puffereinheiten (121, 122, 123, 124, 125, 126) in die jeweils zugewiesene Entladeeinheit (131, 132, 133, 134, 135, 136), sobald die zuvor in diese Entladeeinheit (131, 132, 133, 134, 135, 136) transportierte Trägereinheit (200) mittels des Fördersystems (180) in die Abtransportstation (140, 150) transportiert wird.

11. Verfahren nach Anspruch 9 oder 10, ferner umfassend:
Bestimmen und Überwachen einer Spannung und einer Temperatur von auf den kontaktierten Trägereinheiten (200) angeordneten Batterieeinheiten (300) in der Entladeeinheit (130); und/oder
Regeln eines Entladestroms zum Entladen der auf der kontaktierten Trägereinheit (200) angeordneten Batterieeinheit (300) in der Entladeeinheit (130); und/oder
Steuern einer Entladegeschwindigkeit zum Entladen der auf der kontaktierten Trägereinheit (200) angeordneten Batterieeinheit (300).

## Claims

1. Apparatus (100) for discharging battery units (300), comprising:
a plurality of carrier units (200), wherein a battery unit (300) can be arranged and electrically contacted on each of the carrier units (200);
a conveyor system (180), configured to transport individual carrier units (200);
a buffer station (120), configured to receive and temporarily store a number of the carrier units (200);
a discharge station (130), configured to receive individual carrier units (200) from the buffer station (120);
a removal station (140, 150), configured to transport away individual carrier units (200) from the discharge station (130);
a contacting arrangement (190), configured to produce an electrical contacting to carrier units (200) received in the discharge station (130) in such a way that a series connection (310) of battery units (300) arranged on these electrically contacted carrier units (200) is produced, to discharge battery units (300) of this series connection (310) and to disconnect the electrical contacting to individual carrier units (200) individually and independently of one another, so that the battery units (300) arranged on these carrier units (200) are removed individually and independently of one another from the series connection (310),
wherein the contacting arrangement (190) comprises:
contact elements (191, 192, 193, 194, 195, 196), each configured to be brought into contact with carrier units (200) received in the discharge station (130) and thus to be electrically contacted;
a switch arrangement (400) comprising a plurality of switch units (411, 412), configured to produce the series connection (310) of battery units (200) arranged on the electrically contacted carrier units (200); and
a discharge circuit (500), configured to discharge battery units (300) of the series connection (3100).

2. Apparatus (100) according to claim 1, wherein each carrier unit (200) comprises respective fixed contact elements (220) and flexible line connections (230), wherein the fixed contact elements (220) are electrically connectable to a battery unit (300) arranged on the carrier unit (200) via the flexible line connections (230).

3. Apparatus (100) according to any one of the preceding claims, further comprising a safety station (170), configured to receive individual carrier units (200) from the discharge station (130) and to act upon them by means of safety mechanisms.

4. Apparatus (100) according to any one of the preceding claims, wherein the apparatus (100) further comprises a loading station (110) in which a battery unit (300) can respectively be arranged and contacted on individual carrier units (200), wherein the conveyor system (180) is configured to transport individual carrier units (200) from the loading station (110) to the buffer station (120), and wherein the buffer station (120) is configured to receive individual carrier units (200) from the loading station (110) and temporarily store them, and/or wherein the apparatus (100) further comprises an unloading station (160), configured to receive individual carrier units (200) from the removal station (140, 150), wherein battery units (300) arranged in the received carrier units (200) can be electrically disconnected from the respective carrier unit (200) and removed in the unloading station (160).

5. Apparatus (100) according to any one of the preceding claims, wherein the buffer station (120) comprises one or more buffer units (121, 122, 123, 124, 125, 126), wherein each of these buffer units (121, 122, 123, 124, 125, 126) is respectively configured to temporarily store a carrier unit (200), wherein the discharge station (130) comprises one or more discharge units (131, 132, 133, 134, 135, 136), wherein each of these discharge units (131, 132, 133, 134, 135, 136) is respectively configured to receive a carrier unit (200) from one of the buffer units (121, 122, 123, 124, 125, 126) of the buffer station (120), wherein one of the buffer units (121, 122, 123, 124, 125, 126) is respectively assigned to one of the discharge units (131, 132, 133, 134, 135, 136) and wherein assigned buffer units (121, 122, 123, 124, 125, 126) and discharge units (131, 132, 133, 134, 135, 136) are each coupled via a conveyor unit (182, 183, 184, 185, 186, 187) of the conveyor system (180).

6. Apparatus (100) according to any one of the preceding claims, wherein the removal station comprises:
an outlet station (140), configured to receive individual carrier units (200) from the discharge station (120) individually and independently of one another,
a second buffer station (150), configured to receive carrier units (200) received in the outlet station (140), in particular all carrier units (200) from the outlet station (140) together, and temporarily store them.

7. Apparatus (100) according to claim 6, insofar as dependent on claim 5,
wherein the outlet station (140) comprises one or more outlet units (141, 142, 143, 144, 145, 146), wherein each of these outlet units (141, 142, 143, 144, 145, 146) is respectively configured to receive a carrier unit from one of the discharge units (131, 132, 133, 134, 135, 136) of the discharge station (130),
wherein one of the outlet units (141, 142, 143, 144, 145, 146) is respectively assigned to one of the discharge units (131, 132, 133, 134, 135, 136) and wherein respectively assigned buffer units (121, 122, 123, 124, 125, 126), discharge units (131, 132, 133, 134, 135, 136) and outlet units (141, 142, 143, 144, 145, 146) are coupled via the respective conveyor units (182, 183, 184, 185, 186, 187) of the conveyor system (180).

8. Apparatus (100) according to any one of the preceding claims, wherein the buffer station (130), the discharge station (130) and the removal station (140, 150) are arranged within a protected area (105).

9. Method for operating an apparatus (100) according to any one of the preceding claims, comprising:
arranging one battery unit (300) each on individual ones of the carrier units (200) and electrically contacting the individual carrier units (200) with the respective battery unit (300) arranged thereon;
transporting individual carrier units (200) on which a respective battery unit (300) is arranged into the buffer station (120) by means of the conveyor system (180) and temporarily storing these carrier units (200) in the buffer station (120);
transporting individual carrier units (200) individually and independently of one another out of the buffer station (120) into the discharge station (130) by means of the conveyor system (180);
producing an electrical contacting between the contacting arrangement (190) and the carrier units (200) received in the discharge station (130) and producing a series connection (310) of battery units (300) which are arranged on these electrically contacted carrier units (200);
discharging the battery units (300) of this series connection (310) by means of the contacting arrangement (190);
disconnecting the electrical contacting between the contacting arrangement (190) and individual carrier units (200) received in the discharge station (130) individually and independently of one another and removing the battery units (300) arranged on these respective carrier units (200) individually and independently of one another from the series connection (310), each time when a predetermined event occurs which characterizes a sufficient discharging of the battery unit (300) arranged on these respective carrier units (200);
transporting the respective carrier units (200), whose electrical contacting to the contacting arrangement (190) has been disconnected, individually and independently of one another out of the discharge station (130) into the removal station (140, 150) by means of the conveyor system (180).

10. Method according to claim 9, insofar as dependent on claim 5, when the buffer station (120) comprises one or more buffer units (121, 122, 123, 124, 125, 126) and when the discharge station (131, 132, 133, 134, 135, 136) comprises one or more discharge units (131, 132, 133, 134, 135, 136), further comprising:
transporting a carrier unit (200) from one of the buffer units (121, 122, 123, 124, 125, 126) into the respectively assigned discharge unit (131, 132, 133, 134, 135, 136) as soon as the carrier unit (200) previously transported into this discharge unit (131, 132, 133, 134, 135, 136) is transported into the removal station (140, 150) by means of the conveyor system (180).

11. Method according to claim 9 or 10, further comprising:
determining and monitoring a voltage and a temperature of battery units (300) arranged on the contacted carrier units (200) in the discharge unit (130); and/or
regulating a discharge current for discharging the battery unit (300) arranged on the contacted carrier unit (200) in the discharge unit (130); and/or
controlling a discharge rate for discharging the battery unit (300) arranged on the contacted carrier unit (200).

## Revendications

1. Dispositif (100) pour décharger des unités de batterie (300), comprenant :
une pluralité d'unités de support (200), dans lequel une unité de batterie (300) peut être agencée et mise en contact électrique sur chacune des unités de support (200) ;
un système de transport (180), configuré pour transporter certaines des unités de support (200) ;
une station tampon (120), configurée pour recevoir et stocker temporairement un certain nombre des unités de support (200) ;
une station de décharge (130), configurée pour recevoir des unités de support (200) individuelles depuis la station tampon (120) ;
une station d'évacuation (140, 150), configurée pour évacuer des unités de support (200) individuelles depuis la station de décharge (130) ;
un agencement de mise en contact (190), configuré pour produire une mise en contact électrique avec des unités de support (200) reçues dans la station de décharge (130) de telle sorte qu'un montage en série (310) d'unités de batterie (300) agencées sur ces unités de support (200) mises en contact électrique est produit, pour décharger des unités de batterie (300) de ce montage en série (310) et pour séparer la mise en contact électrique d'unités de support (200) individuelles individuellement et indépendamment les unes des autres, de sorte que les unités de batterie (300) agencées sur ces unités de support (200) sont retirées du montage en série (310) individuellement et indépendamment les unes des autres,
dans lequel l'agencement de mise en contact (190) comprend :
des éléments de contact (191, 192, 193, 194, 195, 196), configurés chacun pour être amenés en contact avec des unités de support (200) reçues dans la station de décharge (130) et ainsi être mis en contact électrique ;
un agencement de commutateurs (400) comprenant une pluralité d'unités de commutateur (411, 412), configuré pour produire le montage en série (310) d'unités de batterie (200) qui sont agencées sur les unités de support (200) mises en contact électrique ; et
un circuit de décharge (500), configuré pour décharger des unités de batterie (300) du montage en série (3100).

2. Dispositif (100) selon la revendication 1, dans lequel chaque unité de support (200) comprend des éléments de contact fixes (220) respectifs et des connexions de ligne flexibles (230), dans lequel les éléments de contact fixes (220) peuvent être reliés électriquement à une unité de batterie (300) agencée sur l'unité de support (200) par l'intermédiaire des connexions de ligne flexibles (230).

3. Dispositif (100) selon l'une des revendications précédentes, comprenant en outre une station de sécurité (170), configurée pour recevoir des unités de support (200) individuelles depuis la station de décharge (130) et pour agir sur elles au moyen de mécanismes de sécurité.

4. Dispositif (100) selon l'une des revendications précédentes, dans lequel le dispositif (100) comprend en outre une station de chargement (110) dans laquelle une unité de batterie (300) peut être respectivement agencée et mise en contact sur des unités de support (200) individuelles, dans lequel le système de transport (180) est configuré pour transporter des unités de support (200) individuelles depuis la station de chargement (110) vers la station tampon (120), et dans lequel la station tampon (120) est configurée pour recevoir des unités de support (200) individuelles depuis la station de chargement (110) et les stocker temporairement, et/ou dans lequel le dispositif (100) comprend en outre une station de prélèvement (160), configurée pour recevoir des unités de support (200) individuelles depuis la station d'évacuation (140, 150), dans lequel des unités de batterie (300) agencées dans les unités de support (200) reçues peuvent être séparées électriquement de l'unité de support (200) respective et prélevées dans la station de prélèvement (160).

5. Dispositif (100) selon l'une des revendications précédentes, dans lequel la station tampon (120) comprend une ou plusieurs unités tampons (121, 122, 123, 124, 125, 126), dans lequel chacune de ces unités tampons (121, 122, 123, 124, 125, 126) est respectivement configurée pour stocker temporairement une unité de support (200), dans lequel la station de décharge (130) comprend une ou plusieurs unités de décharge (131, 132, 133, 134, 135, 136), dans lequel chacune de ces unités de décharge (131, 132, 133, 134, 135, 136) est respectivement configurée pour recevoir une unité de support (200) de l'une des unités tampons (121, 122, 123, 124, 125, 126) de la station tampon (120), dans lequel l'une des unités tampons (121, 122, 123, 124, 125, 126) est respectivement assignée à l'une des unités de décharge (131, 132, 133, 134, 135, 136) et dans lequel des unités tampons (121, 122, 123, 124, 125, 126) et des unités de décharge (131, 132, 133, 134, 135, 136) assignées les unes aux autres sont couplées chacune par l'intermédiaire d'une unité de transport (182, 183, 184, 185, 186, 187) du système de transport (180).

6. Dispositif (100) selon l'une des revendications précédentes, dans lequel la station d'évacuation comprend :
une station de sortie (140), configurée pour recevoir des unités de support (200) individuelles de la station de décharge (120) individuellement et indépendamment les unes des autres,
une deuxième station tampon (150), configurée pour recevoir des unités de support (200) reçues dans la station de sortie (140), en particulier toutes les unités de support (200) de la station de sortie (140) ensemble, et les stocker temporairement.

7. Dispositif (100) selon la revendication 6, dans la mesure où elle se réfère à la revendication 5,
dans lequel la station de sortie (140) comprend une ou plusieurs unités de sortie (141, 142, 143, 144, 145, 146), dans lequel chacune de ces unités de sortie (141, 142, 143, 144, 145, 146) est respectivement configurée pour recevoir une unité de support depuis l'une des unités de décharge (131, 132, 133, 134, 135, 136) de la station de décharge (130),
dans lequel l'une des unités de sortie (141, 142, 143, 144, 145, 146) est respectivement assignée à l'une des unités de décharge (131, 132, 133, 134, 135, 136) et dans lequel des unités tampons (121, 122, 123, 124, 125, 126), des unités de décharge (131, 132, 133, 134, 135, 136) et des unités de sortie (141, 142, 143, 144, 145, 146) respectivement assignées les unes aux autres sont couplées par l'intermédiaire des unités de transport respectives (182, 183, 184, 185, 186, 187) du système de transport (180).

8. Dispositif (100) selon l'une des revendications précédentes, dans lequel la station tampon (130), la station de décharge (130) et la station d'évacuation (140, 150) sont agencées à l'intérieur d'une zone protégée (105).

9. Procédé pour faire fonctionner un dispositif (100) selon l'une des revendications précédentes, comprenant :
l'agencement d'une unité de batterie (300) respective sur certaines unités des unités de support (200) et la mise en contact électrique des unités de support (200) individuelles avec l'unité de batterie (300) respective agencée sur celles-ci ;
le transport d'unités de support (200) individuelles, sur lesquelles une unité de batterie (300) respective est agencée, au moyen du système de transport (180) dans la station tampon (120) et le stockage temporaire de ces unités de support (200) dans la station tampon (120) ;
le transport d'unités de support (200) individuelles individuellement et indépendamment les unes des autres au moyen du système de transport (180) hors de la station tampon (120) dans la station de décharge (130) ;
la production d'une mise en contact électrique entre l'agencement de mise en contact (190) et les unités de support (200) reçues dans la station de décharge (130) et la production d'un montage en série (310) d'unités de batterie (300) qui sont agencées sur ces unités de support (200) mises en contact électrique ;
la décharge des unités de batterie (300) de ce montage en série (310) à l'aide de l'agencement de mise en contact (190) ;
la séparation de la mise en contact électrique entre l'agencement de mise en contact (190) et des unités de support (200) individuelles reçues dans la station de décharge (130) individuellement et indépendamment les unes des autres et le retrait des unités de batterie (300) agencées sur ces unités de support (200) respectives individuellement et indépendamment les unes des autres hors du montage en série (310), à chaque fois qu'un événement prédéfini se produit, lequel caractérise une décharge suffisante de l'unité de batterie (300) agencée sur ces unités de support (200) respectives ;
le transport des unités de support (200) respectives, dont la mise en contact électrique avec l'agencement de mise en contact (190) a été séparée, individuellement et indépendamment les unes des autres au moyen du système de transport (180) hors de la station de décharge (130) dans la station d'évacuation (140, 150).

10. Procédé selon la revendication 9 dans la mesure où elle se réfère à la revendication 5, lorsque la station tampon (120) comprend une ou plusieurs unités tampons (121, 122, 123, 124, 125, 126) et lorsque la station de décharge (131, 132, 133, 134, 135, 136) comprend une ou plusieurs unités de décharge (131, 132, 133, 134, 135, 136), comprenant en outre : le transport d'une unité de support (200) d'une des unités tampons (121, 122, 123, 124, 125, 126) dans l'unité de décharge (131, 132, 133, 134, 135, 136) respectivement assignée, dès que l'unité de support (200) précédemment transportée dans cette unité de décharge (131, 132, 133, 134, 135, 136) est transportée dans la station d'évacuation (140, 150) au moyen du système de transport (180).

11. Procédé selon la revendication 9 ou 10, comprenant en outre :
la détermination et la surveillance d'une tension et d'une température d'unités de batterie (300) agencées sur les unités de support (200) mises en contact dans l'unité de décharge (130) ; et/ou
la régulation d'un courant de décharge pour décharger l'unité de batterie (300) agencée sur l'unité de support (200) mise en contact dans l'unité de décharge (130) ; et/ou
la commande d'une vitesse de décharge pour décharger l'unité de batterie (300) agencée sur l'unité de support (200) mise en contact.
